# EUROPEAN PATENT APPLICATION

(11) **EP 4 257 345 A1**
(43) Date of publication of application: **11.10.2023**
(21) Application number: 22166878.3
(22) Date of filing: 06.04.2022
(51) Int. Cl.: B29C 73/16, B29C 73/22, B32B 7/05, B32B 27/32, C08L 7/02, C09J 107/02

(54) **USE OF A SELF-HEALING MATERIAL FOR THE FORMATION OF A FILM BAG**

(71) Applicant: Henkel AG & Co. KGaA, 40589 Düsseldorf (DE)
(72) Inventor: OZKUL, Omer, Al Barsha, South Dubai (AE)

(57) **Abstract**

The invention relates to the use of a self-healing material to form a film bag for the storage of a liquid detergent or cleaning agent.

## Description

The present invention relates to the use of a self-healing material for the formation of a film bag.

Due to a growing awareness of sustainable and environmentally friendly packaging, liquids, especially detergents and cleaning agents, are nowadays no longer offered exclusively in thick-walled plastic bottles and containers, but increasingly in flexible, easily recyclable pouch packaging based on plastic film. Such film bags can be produced comparatively inexpensively and have a favorable ratio of packaging weight to product weight.

In addition, so-called bag-in-box packaging is also known, in which a liquid is filled into a film bag, which in turn is arranged in an outer carton. The film bag is generally equipped with a tap which projects through an opening in the outer carton so that the liquid can be removed from the container by actuating the tap. Bag-in-box packaging of this type can be transported and stored particularly well and efficiently and is especially e-commerce friendly.

One disadvantage of using thin-walled film bags, however, is that damage to the film can easily occur, for example in the form of small holes or tears, as a result of which the filled liquids escape from the packaging. The larger the capacity of the respective film bag, the greater the damage.

A possible area of application for large-volume bag-in-box packaging is, for example, in countries in the Middle East and Africa, where detergents and cleaning agents are frequently offered by retailers from large containers for filling by customers into small bottles or containers they bring with them. The film bags for stocking the detergents and cleaning agents can have capacity volumes of around 301 to 501, so that the damage in the event of rupture or perforation of the film bag is great. The use of thicker films to form the film bags would in principle provide better protection against damage, but at the same time the material consumption for the packaging would increase accordingly, which is considered to be disadvantageous.

It is therefore an object of the present invention to provide a film bag for detergents or cleaning agents, which has a higher resistance than known film bags and overcomes the disadvantages of the prior art.

This task is solved according to patent claim 1 by using a self-healing material to form such a film bag.

Concrete embodiments and further developments of the invention are the subject of the dependent claims.

According to claim 1, the invention provides for using a self-healing material to form a film bag for storing a liquid detergent or cleaning agent.

Self-healing or self-sealing materials have been used in the aviation industry for many years. For example, self-sealing fuel tanks are known from US 2,374,332 and US 10,457,138 B2. On the inside of the tank, there is a composite layer consisting of a liquid-tight layer facing the fuel and an adjacent sealing layer. In the event of damage to the tank wall, in particular to the liquid-tight layer, for example as a result of projectile impact, fuel passes through the tank wall and comes into contact with the sealing layer. The material of the sealing layer then swells or expands, causing the damaged area to close again by itself.

The invention is now based on the idea of using such self-healing materials to form a film bag for storing a liquid detergent or cleaning agent. In the event of a rupture or perforation of the film bag, the damaged area would consequently close again on its own and no or only a very limited amount of detergent or cleaning agent would escape from the film bag.

According to one embodiment of the invention, the self-healing material is formed as a multilayer film comprising at least two liquid-tight layers and a layer comprising a swelling agent disposed therebetween. The layer comprising a swelling agent is formed from a viscous material comprising a swelling agent, described in more detail below. The two liquid-tight layers form the innermost and outermost layers of the multilayer film, so that when a film bag for storing a liquid detergent or cleaning agent is formed from such a multilayer film, one of the liquid-tight layers directly faces the detergent or cleaning agent. If the liquid-tight layer facing the detergent or cleaning agent is damaged, detergent or cleaning agent comes into contact with the layer comprising a swelling agent. This then swells at the point of contact in such a way that the damaged area closes again.

If necessary, the film formed as a layered composite can have further layers between the liquid-tight layers and the layer comprising a swelling agent. Several layers comprising a swelling agent can also be provided. The liquid-tight layers can be made from a suitable plastic, for example from high-density polyethylene or from polypropylene.

One embodiment of the invention provides that the swelling agent comprises latex. Natural latex, synthetic latex or mixtures thereof may be used.

To keep the swelling agent, in particular latex, sufficiently flowable, the layer comprising a swelling agent can comprise a solvent. This ensures that the swelling agent can flow to and enter the damaged area to a sufficient extent in the event of damage to the film bag.

It may further be provided that the layer comprising a swelling agent comprises a coagulating agent and/or a hardener. According to the invention, coagulating agents are fillers capable of filling and sealing the damaged area together with the swelling agent as quickly as possible. Suitable coagulating agents include calcium carbonate or fibers. The selection of a suitable coagulating agent depends, among other things, on the expected size of a damaged area to be sealed and on the required sealing speed. The latter, in turn, depends, among other things, on the viscosity of the stocked detergent or cleaning agent. Hardeners may be provided to ensure that the material which has entered the damaged area cures quickly and permanently, thus sealing the damaged area permanently.

According to one embodiment, the layer comprising a swelling agent may comprise a mixture of natural latex, synthetic latex, ethylene glycol as well as polyurethane latex. Such a mixture is described in US 9,115,270 B1 as a composition for repairing and sealing damaged tires. It has been shown that such a mixture or a similar mixture is also eminently suitable for forming the layer comprising a swelling agent of the self-healing material formed as a multilayer film.

According to one embodiment of the invention, the multilayer film has a thickness of less than 260µm. The multilayer film can thus be similarly thin to films used in the prior art for forming film packaging, nevertheless it exhibits significantly better impermeability due to its special structure. This makes it a very good alternative to thicker films. When the film is formed from two liquid-tight layers and a layer comprising a swelling agent arranged between them, the two liquid-tight layers can have essentially the same thickness. They can also have different thicknesses. The thickness of the layer comprising a swelling agent may be less than the thickness of the liquid-tight layers, for example, the thickness of the layer comprising a swelling agent may be about 1/3 of the thickness of one of the liquid-tight layers. When the liquid-tight layers are formed from high-density polyethylene or polypropylene, the thickness of each of the layers may be about 70 to 110 µm.

According to the invention, it may be provided that the multilayer film comprises recycled material. For example, the liquid-tight layers made of high-density polyethylene or polypropylene may comprise a proportion of between 0 and 100% recycled high-density polyethylene or polypropylene.

One embodiment of the invention provides that the two liquid-tight layers are welded together in sections, enclosing between them the layer comprising a swelling agent. By welding the two liquid-tight layers, the multilayer film obtains better stability and a more homogeneous distribution of the swelling agent between the two liquid-tight layers can be ensured. The welding of the two layers can follow a pattern that depends, among other things, on the viscosity of the material comprising a swelling agent enclosed between the two liquid-tight layers. If this material is of very low viscosity and flowable, the pattern may be such that the welding forms a plurality of closed cells in which the material comprising a swelling agent is enclosed. For materials of higher viscosity, the pattern may consist of individual, regularly or irregularly distributed dots or dashes through which the material comprising a swelling agent is not enclosed, but whereby its mobility is restricted. By welding the two liquid-tight layers together, enclosing between them the layer comprising a swelling agent, and by using a suitable adapted welding pattern, a variety of different materials comprising a swelling agent can be used to form the layer comprising a swelling agent. This provides great flexibility in material selection.

In the following, the invention is explained in more detail with reference to a particular embodiment according the accompanying figures. It shows:
- Figure 1:: A schematic sectional view of an embodiment of a self-healing material formed as a multilayer film;
- Figure 2:: schematic top view of a section of a multilayer film.

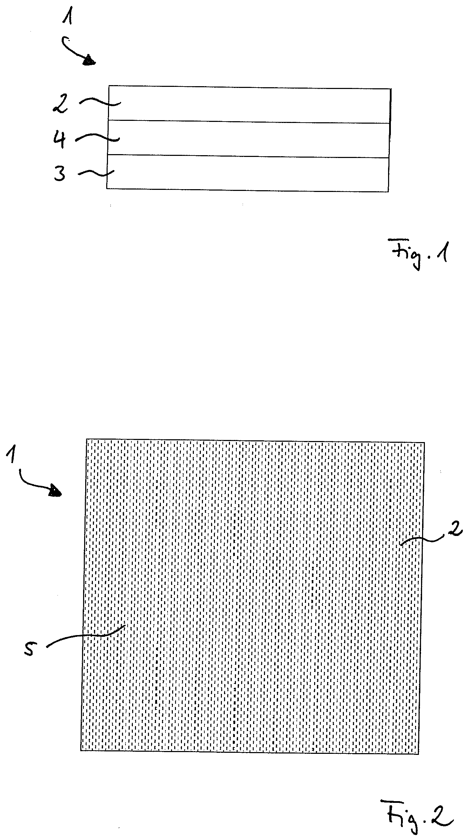

Figure 1 shows a sectional view of a three-layer film 1. The film 1 represents a self-healing material which is used to form film bags for the storage of liquid detergents or cleaning agents.

Film 1 comprises three layers 2, 3, 4. The two outer layers 2 and 3 are made of high-density polyethylene and are therefore liquid-tight. If a film bag is made from film 1 for storing detergent or cleaning agent, layer 3 forms the inside of the film bag and thus faces the detergent or cleaning agent. Layer 2 forms the outside of the film bag. A layer 4 comprising a swelling agent is arranged between the two liquid-tight layers 2, 3. The layer 4 is formed of a viscous material comprising 30 to 80% natural latex, 5 to 35% synthetic latex, 10 to 60% ethylene glycol, and 0.5-10% polyurethane latex.

In the event of damage to a film bag formed from the film 1, in particular damage to the liquid-tight layer 3 facing the detergent or cleaning agent, detergent or cleaning agent comes into contact with the layer 4 comprising the swelling agent. The contact of the detergent or cleaning agent with the swelling agent causes the latter to swell in the region of contact, causing the damaged area to close again. The film 1 is thus self-healing and the detergent or cleaning agent can be effectively prevented from escaping from the film bag through cracks or ruptures in the film bag wall.

The representation of the thicknesses of the individual layers 2, 3, 4 is not to scale in Figure 1. The two liquid-tight layers 2, 3 have essentially the same thickness, while the layer 4 enclosed between them has only about 1/3 of the thickness of each of the layers 2, 3. The total thickness of the film 1 is about 210 µm, with each of the liquid-tight layers 2, 3 having a thickness of about 90 µm and layer 4 having a thickness of about 30 µm.

The liquid-tight layers 2, 3 are welded together in sections, enclosing between them the layer 4 comprising a swelling agent, which is not evident from Figure 1. The sectional welding of layers 2 and 3 results in the film 1 having greater stability and a more homogeneous distribution of the swelling agent in layer 4 between the two liquid-tight layers 2, 3 can be ensured.

Figure 2 shows a top view of the outer layer 2 of a section of a multilayer film 1. This illustration shows a pattern 5 according to which the two liquid-tight layers 2, 3 are welded together. The pattern 5 comprises a plurality of regularly arranged short dashes. The material enclosed between the two layers 2, 3 and forming layer 4, in particular the swelling agent, is thus prevented from moving completely freely between the layers 2, 3, but it can nevertheless move to a certain extent within the channels formed by the welding pattern 5 and thus, in the event of rupture of the film 1, quickly enter the damaged area, where it swells on contact with the detergent or cleaning agent and thus quickly reseals the damaged area.

## Claims

1. Use of a self-healing material for forming a film bag for storing a liquid detergent or cleaning agent.

2. Use according to claim 1, **characterized in that** the self-healing material is formed as a multilayer film (1), comprising at least two liquid-tight layers (2, 3) and a layer (4) comprising a swelling agent arranged between them.

3. Use according to claim 2, **characterized in that** the swelling agent comprises latex.

4. Use according to claim 2 or 3, **characterized in that** the layer (4) comprising a swelling agent comprises a solvent.

5. Use according to any one of claims 2 to 4, **characterized in that** the layer (4) comprising a swelling agent comprises a coagulating agent.

6. Use according to any one of claims 2 to 5, **characterized in that** the layer (4) comprising a swelling agent comprises a hardener.

7. Use according to any one of claims 3 to 6, **characterized in that** the layer (4) comprising a swelling agent comprises a mixture of natural latex, synthetic latex, ethylene glycol as well as polyurethane latex.

8. Use according to any one of claims 2 to 7, **characterized in that** the multilayer film (1) has a thickness of less than 260 µm.

9. Use according to any one of claims 2 to 8, **characterized in that** the thickness of the layer (4) comprising a swelling agent is about 1/3 of the thickness of the liquid-tight layers (2, 3).

10. Use according to any one of claims 2 to 9, **characterized in that** the multilayer film (1) comprises recycled material.

11. Use according to any one of claims 2 to 10, **characterized in that** the two liquid-tight layers (2, 3) are welded together in sections, enclosing between them the layer (4) comprising a swelling agent.
